Europäisches Patentamt

European Patent Office

Office européen des brevets

(11) Veröffentlichungsnummer : **0 126 423**
**B1**

(12) **EUROPÄISCHE PATENTSCHRIFT**

(45) Veröffentlichungstag der Patentschrift :
02.11.89

(51) Int. Cl.⁴ : **G 01 P   3/68**

(21) Anmeldenummer : 84105537.9

(22) Anmeldetag : 15.05.84

(54) **Vorrichtung zum Messen der Geschwindigkeit eines von einer Hand- oder Faustfeuerwaffe abgeschossenen Geschosses.**

(30) Priorität : 20.05.83 DE 3318378

(43) Veröffentlichungstag der Anmeldung :
28.11.84 Patentblatt 84/48

(45) Bekanntmachung des Hinweises auf die Patenterteilung : 02.11.89 Patentblatt 89/44

(84) Benannte Vertragsstaaten :
AT BE CH FR GB IT LI

(56) Entgegenhaltungen :
US—A— 2 641 458
US—A— 4 128 761
BRITISH JOURNAL OF APPLIED PHYSICS, Band 2, September 1951, Seiten 270-271, The Chemical Society, Letchworth, GB; R.M. DAVIES et al.: "The measurement of the velocities of bullets with a counter chronometer"
MESURES ET CONTROL INDUSTRIEL, Band 25, Nr. 273, Februar 1960, Seiten 143-153; P. FAYOLLE: "Méthodes modernes de mesure de la vitesse des projectiles"

(73) Patentinhaber : Weinlich, Leopold
Industriestrasse 6
D-6831 Reilingen (DE)

(72) Erfinder : Weinlich, Leopold
Industriestrasse 6
D-6831 Reilingen (DE)

(74) Vertreter : Rüger, Rudolf, Dr.-Ing. et al
Webergasse 3 Postfach 348
D-7300 Esslingen/Neckar (DE)

EP 0 126 423 B1

Jouve, 18, rue St-Denis, 75001 Paris, France

## Beschreibung

Die Erfindung betrifft eine Vorrichtung zum Messen der Geschwindigkeit eines von einer Hand- oder Faustfeuerwaffe abgeschossenen Geschosses, mit den Merkmalen des ersten Teils des Patentanspruchs 1.

Aus BRITISH JOURNAL OF APPLIED PHYSICS, Band 2, September 1951, Seiten 270-271, The Chemical Society, Letchworth, GB ; R. M. DAVIES et al. : « The measurement of the velocities of bullets with a counter chronometer » ist eine Anordnung zur Messung der Geschwindigkeit von Bleiprojektilen des Kalibers .22 bekannt, die mittels einer starr montierten Abschußvorrichtung zur Untersuchung von Stoßwellen in festen Körpern auf diese geschossen werden.

Diese Meßanordnung besteht aus einem Messingrohr mit zwei im Abstand angeordneten Lichteinlaßöffnungen und diesen zugeordneten Lichtauslaßöffnungen. Das Messingrohr ist in den Stirnwänden eines massiven Gehäuses gehalten und umschließt somit die Geschoßbahn allseitig. Die Lichtquellen und die Lichtempfänger sind außerhalb des Rohres in dem Gehäuse den Lichteinlaß- bzw. den Lichtauslaßöffnungen zugeordnet untergebracht.

Um zu verhindern, daß der im Bereich der Laufmündung der Abschußvorrichtung entstehende Mündungsdruck sich in das Innere der Meßanordnung fortpflanzt und diese zerstört, ist die Abschußvorrichtung in einem ausreichenden Abstand von der Meßanordnung angeordnet.

Weiterhin ist die Abschußvorrichtung starr und präzise justiert in Bezug auf die Meßanordnung positioniert, so daß ein Geschoß vom Kaliber .22 durch das Messingrohr trotz seines geringen Durchmessers und seiner Länge achsparallel hindurchgeschossen werden kann, ohne daß das Bleiprojektil die Innenwandung des Messingrohres dabei berührt oder auf die breite Stirnwand trifft.

Eine weitere, aus der Praxis bekannte Vorrichtung dieser Art verwendet zwei getrennte Lichtschranken, von denen jede einen richtungsempfindlichen Lichtempfänger aufweist, der in einem eigenen Gehäuse mit einem quer zu der Geschoßbahn angeordneten Lichteinlaßschlitz untergebracht ist. Die Lichtempfänger werden über die Lichteinlaßschlitze entweder durch Tageslicht oder durch das Licht darüber angeordneter Lampen beleuchtet. Die beim Überfliegen eines Lichteinlaßschlitzes von dem Geschoß hervorgerufene kurzzeitige Abdunklung des Lichteinlaßschlitzes bewirkt, daß der Lichtempfänger ein entsprechendes Signal abgibt ; Zeitzähler der zugeordneten Signalauswertungsschaltung messen die zwischen dem Auftreten der Signale der beiden Lichtempfänger verstrichene Zeitspanne, aus deren Länge, zusammen mit dem Abstand er beiden Lichtschranken, sich die Geschoßgeschwindigkeit errechnen läßt.

Die beiden jeweils ein eigenes Gehäuse aufweisenden Lichtschranken sind auf einer leistenartigen Grundplatte hintereinander angeordnet, was die Gefahr mit sich bringt, daß insbesondere die von der Laufmündung der Waffe entfernter liegende zweite Lichtschranke von dem Geschoß getroffen werden kann, mit der Folge, daß nicht nur die Vorrichtung zerstört, sondern auch Personen durch das rückprallende Geschoß oder abgeschlagene Teile gefährdet werden können. Davon abgesehen bringt die Verwendung mehrerer getrennter Teile die Gefahr von Meßunsicherheiten mit sich, weil der Abstand der beiden Lichtschranken in die Berechnungen der Geschoßgeschwindigkeit eingeht und deshalb sehr exakt eingestellt werden muß. Schließlich ist die Berechnung der Geschoßgeschwindigkeit aus Zeit- und Lichtschrankenabstand, die in einer getrennten Rechenoperation durchzuführen ist, umständlich.

Der Gefahr, mit dem Geschoß versehentlich einen Teil der Meßvorrichtung zu treffen, ist bei einer anderen, ebenfalls aus der Praxis bekannten Vorrichtung dadurch abgeholfen, daß die ebenfalls zwei im Abstand angeordnete Lichtschranken aufweisende Vorrichtung unmittelbar auf den Lauf der Waffe aufgesetzt ist. Dafür muß aber in Kauf genommen werden, daß bei der Schußabgabe auftretende Erschütterungen des Laufes auf die Lichtschranken übertragen werden, was zur Beeinträchtigung der Funktion und der Meßgenauigkeit führen kann. Auch dürfen das Gewicht und die Längenerstreckung der Vorrichtung ein bestimmtes, verhältnismäßig geringes Höchstmaß nicht überschreiten, weil sonst die Handhabung der Waffe beeinträchtigt wird. Häufig sind auch die an dem Lauf der Waffe zur Anbringung der Vorrichtung erforderlichen Veränderungen unerwünscht, wie sich überhaupt eine gewisse Veränderung der Schußbedingungen durch das Aufsetzen einer solchen Vorrichtung auf den Lauf der Waffe nicht verhindern läßt.

Wieder andere bekannte Meßvorrichtungen verzichten deshalb auf den Gebrauch von Lichtschranken überhaupt und verwenden statt dessen in vorbestimmtem Abstand angeordnete, elektrisch leitende Folienstreifen, die von dem Geschoß aufeinanderfolgend durchschlagen werden. Die Meßgenauigkeit und die Störunempfindlichkeit dieser Vorrichtungen sind aber beschränkt.

Aufgabe der Erfindung ist es deshalb, eine Vorrichtung zum Messen der Geschoßgeschwindigkeit zu schaffen, bei der ohne feste Verbindung oder eine starre Zuordnung des Laufes der Waffe zu der Vorrichtung die Gefahr der Beschädigung der Vorrichtung oder der Gefährdung von Personen durch das Geschoß selbst oder durch von diesem abgeschlagene Teile auf ein Minimum reduziert ist.

Zur Lösung dieser Aufgabe ist die eingangs genannte Vorrichtung erfindungsgemäß durch die Merkmale des Patentanspruchs 1 gekennzeichnet.

Dadurch, daß die beiden Lichtempfänger hinter der ebenen, parallel zu der Geschoßbahn verlaufenden Trennwand angeordnet sind, ist eine Beschädigung der Lichtempfänger oder der Vorrichtung durch das Geschoß auch dann ausgeschlossen, wenn dieses bei ungünstiger Haltung der Waffe auf die Trennwand auftreffen sollte. Der Auftreffwinkel des Geschosses ist nämlich dann so flach, daß das Geschoß von der glatten Trennwand einfach abgewiesen wird, ohne daß es zu einem Rückprallen des Geschosses oder dazu kommen kann, daß Teile der Vorrichtung abgeschlagen werden.

Durch die Trennwand ist der in die Berechnung der Geschoßgeschwindigkeit eingehende Abstand der beiden den Lichtempfängern zugeordneten Lichteinlaßöffnungen exakt festgelegt, so daß sich die Geschoßgeschwindigkeit mit hoher Genauigkeit bestimmen läßt. Schließlich ist eine feste Verbindung zwischen der Meßvorrichtung und dem Lauf der Waffe nicht erforderlich.

In einer Ausführungsform kann die Anordnung derart getroffen sein, daß das die Lichtempfänger enthaltende längliche Gehäuse zumindest auf der der Geschoßbahn zugewandten Seite in Geschoßflugrichtung prismatisch gestaltet ist.

Um auch bei geringfügigen seitlichen Abweichungen der Geschoßflugbahn einwandfreie Meßergebnisse zu erzielen, ist es zweckmäßig, wenn die Lichteinlaßöffnungen als längliche, quer zu der Geschoßbahn ausgerichtete schmale Lichteinlaßschlitze ausgebildet sind. Dabei kann dann jeder Lichtempfänger eine entsprechend der Ausrichtung der Lichteinlaßschlitze angeordnete längliche lichtempfindliche Fläche aufweisen. Um mit Lichtempfängern mit kleinerer lichtempfindlicher Fläche auszukommen, kann im Strahlengang zwischen jeder Lichteinlaßöffnung und der lichtempfindlichen Fläche des zugeordneten Lichtempfängers wenigstens eine Sammellinse angeordnet sein, die mit Vorteil eine Zylinderlinse mit in Geschoßflugrichtung ausgerichteter Achse ist.

Wird die Vorrichtung zur Messung der Geschoßgeschwindigkeit von Hand- oder Faustfeuerwaffen verwendet, bei denen bei der Abgabe des Schusses ein starker Niederschlag von Pulverrückstandsteilchen zu erwarten ist, ist es zweckmäßig, wenn jede Lichteinlaßöffnung durch eine lichtdurchlässige Schutzabdeckung abgedeckt ist. Diese Schutzabdeckung kann mit der Linse vereinigt sein. Sie verhindert gleichzeitig auch eine Verschmutzung oder Verstaubung der lichtempfindlichen Flächen der Lichtempfänger, wodurch die Empfindlichkeit der Lichtempfänger beeinträchtigt würde.

Um sicherzustellen, daß auch die Halterung des die Lichtempfänger enthaltenden Gehäuses keine gefährlichen Aufprallflächen für das Geschoß bietet, ist es vorteilhaft, wenn das Gehäuse auf der der Geschoßbahn gegenüberliegenden (abliegenden) Seite ortsfest gehalten ist; in einer anderen Ausführungsform kann es auch seitlich der Geschoßbahn gehalten sein. Zweckdienlich ist es aber in beiden Fällen, wenn die Halterung des Gehäuses nahe der Laufmündung der Waffe angeordnet ist.

Die Lichteinlaßöffnungen der beiden Lichtempfänger werden von dem darüberfliegenden Geschoß kurzzeitig teilweise abgedunkelt, was zur Auslösung der von den Lichtempfängern abgegebenen Signale ausgenutzt wird. Die Beleuchtung der Lichteinlaßöffnungen kann unter günstigen Voraussetzungen durch Tageslicht geschehen. Wenn aber an dem Ort, an dem die Waffe geprüft wird, nicht genügend Tageslicht zur Verfügung steht, müssen eigene Beleuchtungseinrichtungen verwendet werden, die dann ebenfalls so zu gestalten sind, daß sie nicht durch das Geschoß zerstört werden oder zur Gefährdung von Personen durch das abprallende Geschoß oder durch abgeschlagene Teile führen können. Um dies sicherzustellen, kann auf der der Trennwand gegenüberliegenden Seite ein wenigstens eine Lichtquelle enthaltendes Gehäuse angeordnet sein, das in einer sich im Abstand längs der Trennwand erstreckenden Blendenwand zwei den Lichteinlaßöffnungen der Trennwand zugeordnete Lichtabstrahlflächen aufweist, die gegebenenfalls durch Lichtauslaßöffnungen gebildet sind. Damit ist nicht nur jede Verletzungsgefahr durch von dem Geschoß abgeschlagene Teile, bspw. Glassplitter einer Lampe, ausgeschlossen, sondern es sind auch annähernd gleichbleibende Lichtverhältnisse an den Lichteinlaßöffnungen der Trennwand des die Lichtempfänger enthaltenden Gehäuses gewährleistet. Auch die Blendenwand des die Lichtquelle(n) enthaltenden Gehäuses wirkt als « Trennwand » und schützt die Lichtquelle(n) gegen die Einwirkung des Geschosses.

Vorteilhaft ist es, wenn längliche Lichtabstrahlflächen verwendet werden, die quer zu der Geschoßbahn ausgerichtet sind und damit parallel zu der Längsausdehnung der Lichteinlaßschlitze der Trennwand des die Lichtempfänger enthaltenden Gehäuses verlaufen.

Wahlweise kann die Lichtquelle auch annähernd punktförmig sein, wobei dann in dem Strahlengang zwischen der Lichtquelle und der Lichtauslaßöffnung eine Kondensorlinse angeordnet werden kann, die das von der Lichtquelle ausgehende Licht in etwa parallel richtet. Aus bereits früher erwähnten Gründen kann jede Lichtauslaßöffnung durch eine lichtdurchlässige Schutzabdeckung abgedeckt sein, die wiederum mit der Linse vereinigt sein kann.

Um ein zufälliges Auftreffen des Geschosses auf der Lichteinlaß- oder -auslaßöffnung bzw. auf deren Abdeckung oder in deren Nähe zu verhüten, kann auf der Trennwand und/oder der Blendenwand, in Geschoßflugrichtung gesehen, vor der jeweils zugeordneten Lichteinlaß- bzw. -auslaßöffnung ein im Querschnitt im wesentlichen keilförmiger Geschoßabweiser mit zu dem Lauf der Waffe hin weisender Keilspitze angeordnet sein.

Ein kompakter, einfacher Aufbau der ganzen Vorrichtung ergibt sich, wenn die beiden Gehäuse durch wenigstens ein seitlich der Geschoßflugbahn verlaufendes Verbindungsstück miteinander verbunden sind. Dieses Verbindungsstück ist mit Vorteil nahe der Laufmündung der Waffe angeordnet, damit es von dem Geschoß nicht getroffen werden kann. Dabei kann das bspw. bügelförmige Verbindungsstück zur Befestigung an einem Stativ eingerichtet sein, während in einer alternativen Ausführungsform das Verbindungsstück selbst ein gehäuseartiges Teil eines Stativs bildet, in dem gleichzeitig die Signalauswertungsschaltung und die Anzeigeeinrichtung untergebracht sein können.

Das Verbindungsstück kann auch in Geschoßflugrichtung verlängert sein, so daß sich die geforderte Steifigkeit der Verbindung ergibt. Durch diese prismatische Verlängerung wird erreicht, daß das Verbindungsstück der Geschoßflugbahn eine ebene, glatte Fläche zu weist, auf die das Geschoß allenfalls nur in einem so spitzen Winkel auftreffen kann, daß es nicht zurückprallen, sondern lediglich abgelenkt werden kann. Dabei ergeben sich besonders einfache Verhältnisse, wenn das Verbindungsstück zugleich als Grundplatte für die auf ihm befestigten Gehäuse der Lichtempfänger und der Lichtquelle(n) ausgebildet ist.

Im Interesse möglichst großer Meßgenauigkeit sollte die Geschoßflugbahn möglichst genau parallel zu der die Lichteinlaßöffnungen enthaltenden Trennwand des die Lichtempfänger aufnehmenden Gehäuses verlaufen, wobei zur Erzielung einer hohen Wiederholgenauigkeit die Geschoßflugbahn immer auf der gleichen Linie liegen soll. Um die Einhaltung dieser Bedingungen bei der Abgabe des Schusses zu erleichtern, kann die Vorrichtung zumindest eine Auflage für den Lauf der Waffe aufweisen, die gegebenenfalls bei Überschreitung einer vorbestimmten Belastung elastisch nachgebend ausgebildet ist. Diese Auflage kann so geformt sein, daß das aufliegende Laufende in Höhenrichtung und seitlich lagerichtig gehalten ist, wobei die Auflage vorzugsweise derart gestaltet ist, daß sie bei Überschreiten eines bestimmten Druckes nach unten nachgibt. Wenn das Ende des Laufes bei Abgabe eines Schusses nicht nur nach oben, sondern auch nach unten auf die Auflage eine schlagartige Belastung ausübt, wird durch die federnde Lagerung der Auflage ein harter Schlag auf das Laufende bzw. auf die Befestigung der Auflage vermieden bzw. abgepuffert. Bei nahezu rückstoßfreien Waffen, beispielsweise Luftdruckwaffen, ist eine solche Abfederung nicht nötig.

Eine weitere Erleichterung der genauen Ausrichtung des Laufes der Waffe kann in der Weise erreicht werden, daß die Vorrichtung eine, in Geschoßflugrichtung gesehen, hinter dem zweiten Lichtempfänger angeordnete Einrichtung zur Aufnahme einer wenigstens eine Visiermarke enthaltenden Zielscheibe aufweist. Die Zielscheibe kann aus einem üblichen Werkstoff, bspw. Pappe, hergestellt sein, wobei die Anordnung derart getroffen sein kann, daß die gegebenenfalls durch Faltung versteifte Zielscheibe unmittelbar an einem der Gehäuse mit außerhalb des Schußbereiches liegenden Befestigungsmitteln befestigt ist. Konzentrisch zu der gewünschten Geschoßbahn kann die Zielscheibe ein den Durchtritt des Geschosses gestattendes Loch aufweisen. Die Visiermarke der Zielscheibe liegt, entsprechend dem Abstand zwischen der Visierlinie und der Geschoßbahn, unterschiedlich hoch. Die Zielscheibe kann deshalb auch eine Skalierung für unterschiedliche Abstände zwischen der Visierlinie und der Geschoßbahn tragen, womit die Vorrichtung wahlweise für verschiedene Hand- und Faustfeuerwaffen eingesetzt werden kann, ohne daß dazu die Zielscheibe ausgetauscht werden müßte.

Schließlich können die Signalauswertungsschaltung und/oder die Anzeigeeinrichtung in einem der Gehäuse und/oder dem Verbindungsstück zwischen den beiden Gehäusen angeordnet sein. Dabei ist es vorteilhaft, wenn die Signalauswertungsschaltung einen durch ein von dem ersten Lichtempfänger kommendes Signal auslösbaren Pulszähler aufweist, der bis zum Empfang des Signales von dem zweiten Lichtempfänger von einer Taktpulsquelle mit vorbestimmter fester Taktfrequenz zugeführte Taktpulse zählt, wobei die Signalauswertungsschaltung eine aus dem Zählerstand und dem Abstand der Lichtempfänger die Geschoßgeschwindigkeit errechnende Rechnerstufe enthält, so daß jede Rechenarbeit für den Benutzer der Vorrichtung entfällt und die Anzeigeeinrichtung unmittelbar die Geschoßgeschwindigkeit anzeigt.

Um Störeinflüsse auszuschalten, die nicht, wie bspw. eine Flammenfront, bereits vor dem Geschoß herlaufen, sondern erst nach dessen Vorbeiflug an der Lichteinlaßöffnung insbesondere des ersten Lichtempfängers auftreten, kann die Signalauswertungsschaltung eine Sperrschaltung aufweisen, die während einer bestimmten Zeitspanne nach dem Ansprechen des zweiten Lichtempfängers die Auswertung von den Lichtempfängern kommender Signale verhindert.

Schließlich ist es noch vorteilhaft, wenn die Vorrichtung eine Einrichtung zur Veränderung der Empfindlichkeit der Lichtempfänger und/oder zur Beeinflussung der Stärke der von diesen abgegebenen Signale aufweist. Auf diese Weise kann die Vorrichtung, abhängig von den bei der Schußabgabe bei der jeweils zu prüfenden Waffe auftretenden unterschiedlichen Gegebenheiten auf eine einwandfreie Unterscheidung des Geschosses von Störeinflüssen wie Flammenfront, Rauchwolke und Begleitstoffen eingestellt werden. Die Einstellung kann dabei stufenlos oder in Stufen geschehen.

In der Zeichnung ist ein Ausführungsbeispiel des Gegenstandes der Erfindung dargestellt. Es zeigen :

Fig. 1 eine Vorrichtung gemäß der Erfindung, in einer ersten Ausführungsform, in der Draufsicht,

Fig. 2 die Vorrichtung nach Fig. 1, geschnitten längs der Linie II-II der Fig. 1, in einer Seitenansicht und in schematischer Darstellung,

Fig. 3 die Vorrichtung nach Fig. 1, geschnitten längs der Linie III-III der Fig. 1, in einer Seitenansicht und in schematischer Darstellung,

Fig. 4 die Vorrichtung nach Fig. 1, in einer abgewandelten Ausführungsform und in einer Draufsicht,

Fig. 5 die Vorrichtung nach Fig. 1, mit einer abgewandelten Ausführung des Lichtstrahlenganges in dem die Lichtempfänger enthaltenden Gehäuse, in einer Querschnittsdarstellung entsprechend Fig. 3,

Fig. 6 die Vorrichtung nach Fig. 5, in einer geschnittenen Teildarstellung entsprechend Fig. 2,

Fig. 7 die Vorrichtung nach Fig. 6, mit einem zusätzlichen Geschoßabweiser, im Ausschnitt und in einer Darstellung entsprechend Fig. 6,

Fig. 8 die Vorrichtung nach Fig. 1, unter schematischer Veranschaulichung der zugehörigen Halterung, in einer Seitenansicht,

Fig. 9, 10 die Vorrichtung nach Fig. 1, unter Veranschaulichung einer anderen Ausführungsform der zugehörigen Halterung, in einer stirnseitigen Seitenansicht und in einer Draufsicht,

Fig. 11 die Vorrichtung nach Fig. 1, in einer dritten Ausführungsform, mit zugeordnetem, die Lichtquellen enthaltendem zweitem Gehäuse, in einer schematischen Schnittdarstellung entsprechend Fig. 2 und in einer Seitenansicht,

Fig. 12 die Vorrichtung nach Fig. 11, unter Veranschaulichung des die beiden Gehäuse miteinander verbindenden Verbindungsstückes, in perspektivischer Darstellung,

Fig. 13 die Vorrichtung nach Fig. 11, unter Veranschaulichung einer abgewandelten Ausführungsform des die beiden Gehäuse miteinander verbindenden Verbindungsstückes, in perspektivischer Darstellung,

Fig. 14 die Vorrichtung nach Fig. 11, unter Veranschaulichung einer weiteren abgewandelten Ausführungsform des Verbindungsstückes zwischen den beiden Gehäusen, in perspektivischer Darstellung,

Fig. 15 die Vorrichtung nach Fig. 1, mit endseitig aufgesetzter Zielscheibe, in einer schematischen Seitenansicht,

Fig. 16 die Vorrichtung nach Fig. 15, in der Draufsicht und im Ausschnitt,

Fig. 17 die Zielscheibe der Vorrichtung nach Fig. 15, im ungefalteten Zustand, in einer Draufsicht und in einem anderen Maßstab,

Fig. 18 eine Laufauflage für die Vorrichtung nach Fig. 1, in schematischer Darstellung und in einer Ansicht von vorne,

Fig. 19 eine Laufauflage für die Vorrichtung nach Fig. 1, in einer abgewandelten Ausführungsform, in schematischer Darstellung und in einer Seitenansicht,

Fig. 20 das Blockschaltbild der Signalauswertungsschaltung und der Anzeigeeinrichtung der Vorrichtung nach Fig. 1, und

Fig. 21 das Blockschaltbild einer abgewandelten Ausführungsform der Signalauswertungsschaltung und der Anzeigeeinrichtung der Vorrichtung nach Fig. 1.

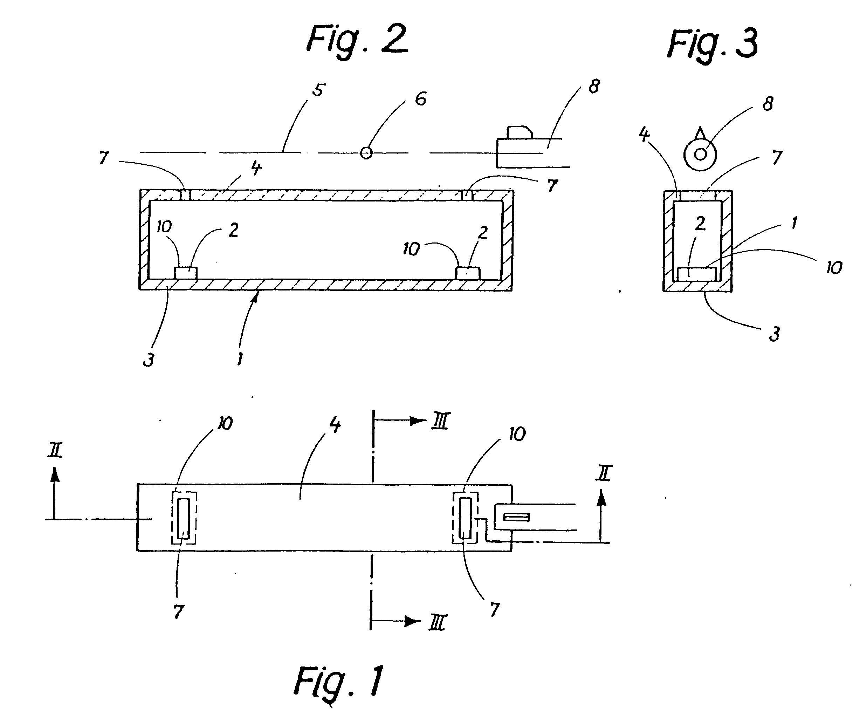

Die in den Fig. 1 bis 3 dargestellte Meßvorrichtung weist ein längliches, prismatisches, parallelflächig begrenztes Gehäuse von rechteckiger Querschnittsgestalt auf, dessen Höhenabmessung etwas größer als die Breitenabmessung ist. In dem Gehäuse sind zwei mit 2 bezeichnete Lichtempfänger untergebracht, die auf der Bodenwand 3, auf deren Längssymmetrielinie liegend, im Abstand hintereinander angeordnet sind. Die Lichtempfänger 2 können bspw. durch Fotodioden, Fototransistoren, Solarzellen etc. gebildet sein.

Die der Bodenwand 3 parallel gegenüberliegende ebene Deckwand des Gehäuses 1 ist als Trennwand 4 zu der bei 5 angedeuteten Flugbahn des Geschosses 6 ausgebildet. Sie enthält zwei den beiden Lichtempfängern 2 zugeordnete und unmittelbar über deren lichtempfindlichen Flächen angeordnete Lichteinlaßöffnungen 7, die in der aus Fig. 1 ersichtlichen Weise als schmale Lichteinlaßschlitze ausgebildet sind, welche sich quer zu der Geschoßflugbahn 5 erstrecken; sie sind mit ihrer Achse rechtwinklig zu der Geschoßflugbahn 5 verlaufend ausgerichtet.

Das Gehäuse 1 besteht aus einem geeigneten formstabilen Material, bspw. Metallblech oder Kunststoffmaterial, wobei die Trennwand 4 eine solche Stärke und Beschaffenheit aufweist, daß ein etwa aufprallendes Geschoß 6 unter einem spitzen Winkel abgewiesen wird, ohne daß die Trennwand beschädigt oder Teile von ihr abgeschlagen werden könnten.

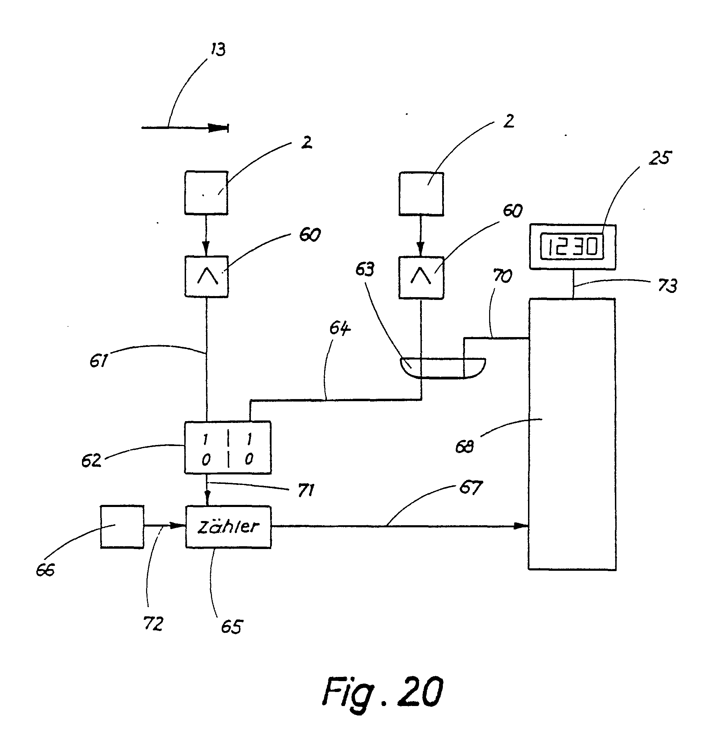

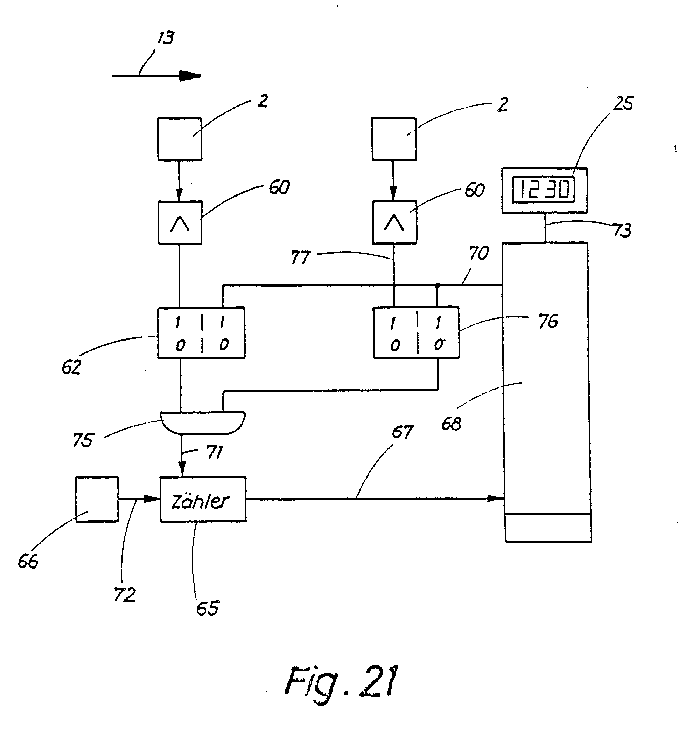

Das aus dem bei 8 dargestellten Lauf einer Hand- oder Faustfeuerwaffe abgeschossene Geschoß 6, das sich längs der Geschoßflugbahn 5 bewegt, überfliegt aufeinanderfolgend die beiden Lichteinlaßschlitze 7, die in einem exakt vorbestimmten Abstand hintereinander angeordnet sind. Dadurch wird der Lichteinfall auf die lichtempfindlichen Flächen der Lichtempfänger 2 aufeinanderfolgend kurzzeitig verringert, was zur Folge hat, daß die beiden Lichtempfänger elektrische Signale abgeben, die in einer in den Fig. 20, 21, dargestellten und noch zu erläuternden Signalauswertungsschaltung ausgewertet werden, die aus dem zeitlichen Abstand zwischen den Signalen der beiden Lichtempfänger 2 und der bekannten Entfernung zwischen den beiden Lichteinlaßschlitzen 7 selbsttätig die Geschoßgeschwindigkeit errechnet und in der Anzeigeeinrichtung zur Anzeige bringt.

Die beiden Lichtempfänger 2 sind im Inneren des Gehäuses 1 in ausreichendem Abstand von den Lichteinlaßschlitzen 7 angeordnet und gegen jede Geschoßeinwirkung geschützt.

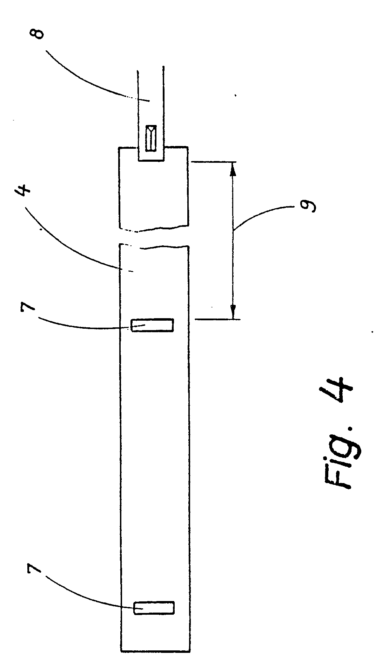

Die Trennwand 4 erstreckt sich, wie aus den Fig. 1 bis 3 zu ersehen, von der Nähe der Mündung des Laufes 8 bis über den von der Laufmündung am weitesten entfernt liegenden (linken) Lichtempfänger 2 hinaus. Bei der Prüfung von Feuerwaffen, bei denen bei der Schußabgabe mit dem Auftreten von starkem Mündungsfeuer mit Rauchausstoß oder mit dem Ausstoß von Begleitstoffen gerechnet werden muß, ist die in Fig. 4 dargestellte Ausführungsform der Vorrichtung zweckmäßig:

Bei dieser Ausführungsform ist die Trennwand 4 in dem Bereich zwischen der Mündung des Laufes 8 und dem dieser benachbarten ersten (rechten) Lichtempfänger verlängert, was durch einen Pfeil 9 angedeutet ist. Damit wird erreicht, daß das Mündungsfeuer, der Rauch und eventuell auftretende Begleitstoffe den rechten Lichteinlaßschlitz 7 nicht mehr oder zumindest nicht mehr mit einer solchen Stärke erreichen, daß von dem zugeordneten Lichtempfänger 2 anstatt des Geschosses 6 die Flammenfront oder die Vorderkante der Rauchwolke bzw. Fremdkörper-Anhäufungen irrtümlich erkannt werden.

Die Lichtempfänger 2 weisen mit Vorteil eine in Längsrichtung der Lichteinlaßschlitze 7 ausgerichtete längliche lichtempfindliche Fläche auf, die unmittelbar vertikal unter dem jeweiligen Lichteinlaßschlitz 7 angeordnet ist. Diese lichtempfindlichen Flächen sind in Fig. 1 bei 10 gestrichelt angedeutet.

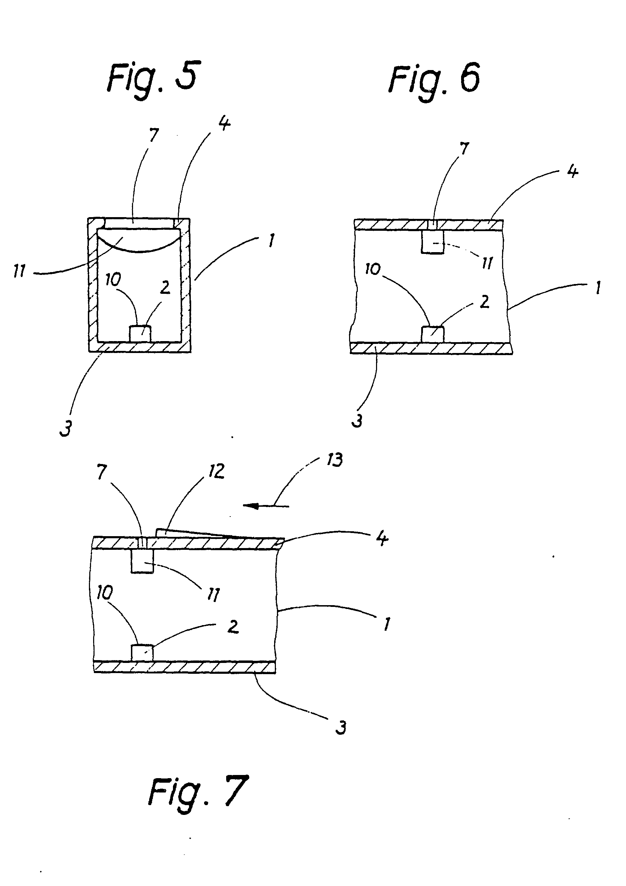

Wenn mit Lichtempfängern 2 mit kleinerer lichtempfindlicher Fläche 10 das Auslangen gefunden werden soll, so kann die Ausführungsform nach den Fig. 5, 6 verwendet werden:

In diesem Falle ist die Anordnung derart getroffen, daß in dem Gehäuse 1 unterhalb des jeweiligen Lichteinlaßschlitzes 7 jeweils eine Zylinderlinse 11 mit in Richtung der Geschoßflugbahn 5 verlaufender Achse angeordnet ist, die das durch den Lichteinlaßschlitz 7 eintretende Licht sammelt und auf die lichtempfindliche Fläche des zugeordneten Lichtempfängers 2 leitet. Der Lichtempfänger 2 kann damit, wie aus Fig. 6 zu ersehen, im Vergleich zu der Ausführungsform nach Fig. 3 kürzer ausgebildet werden, da seine lichtempfindliche Fläche 10 nicht mehr über die Länge der Längserstreckung des darüber angeordneten Lichteinlaßschlitzes 7 ausgedehnt sein muß.

Die Zylinderlinse 11 erfüllt zusätzlich den Zweck einer Abdeckung des Lichteinlaßschlitzes 7, wie sie vor allem für die Prüfung von solchen Feuerwaffen von Bedeutung ist, bei denen mit einem starken Niederschlag von Rauch- oder Begleitteilchen gerechnet werden muß. Es kann auch noch eine weitere, in dem Lichteinlaßschlitz 7 selbst liegende lichtdurchlässige Abdeckung vorgesehen sein, die mit der Zylinderlinse 11 gegebenenfalls vereinigt ist und die gewährleistet, daß sich eine durchgehend glatte Oberfläche der Trennwand 4 ergibt.

Auf die Trennwand 4 kann in der aus Fig. 7 ersichtlichen Weise in Geschoßflugrichtung gesehen vor zumindest dem von dem Lauf 8 am weitesten entfernt liegenden Lichteinlaßschlitz 7 ein im Querschnitt keilförmiger Geschoßabweiser 12 angeordnet sein, dessen Keilspitze zu dem Lauf hin weist und der ein Auftreffen des Geschosses auf den Lichteinlaßschlitz 7 oder in dessen Nähe verhindert. Die Geschoßflugrichtung ist durch einen Pfeil 13 angedeutet.

Das Gehäuse 1 muß so gehaltert sein, daß auch die Halterung keine gefährlichen Aufprallflächen für das Geschoß bietet; d. h. die Halterung muß außerhalb des Schußfeldes liegen.

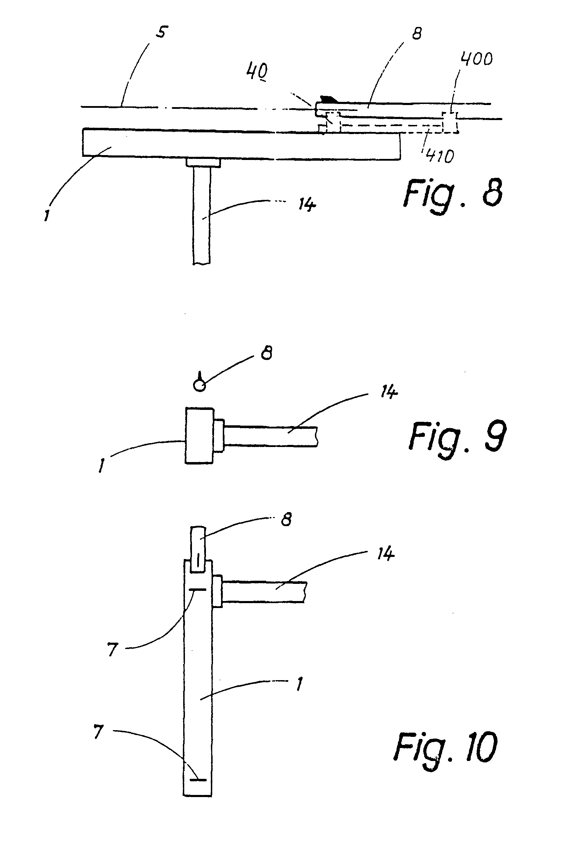

Bei der in Fig. 8 schematisch dargestellten Ausführungsform ist das Gehäuse 1 auf der der Geschoßbahn 5 gegenüberliegenden Seite mittels eines bei 14 angedeuteten Ständers oder Statives ortsfest gehalten.

Bei der Ausführungsform nach Fig. 10 ist die Halterung in Gestalt eines Armes 14 od. dgl. seitlich an dem Gehäuse 1 angesetzt. Dabei liegt, wie aus Fig. 10 zu entnehmen, der Arm 14 nahe des Laufes 8, so daß auch bei schweren Zielfehlern der Arm 14 nicht von dem Geschoß getroffen werden kann.

Die Beleuchtung der Geschoßbahn 5 und der Lichteinlaßschlitze 7 des Gehäuses 1 kann, wenn die Vorrichtung unter günstigen Bedingungen eingesetzt wird, durch Tageslicht erfolgen. Reicht das Tageslicht aber für die Beleuchtung nicht aus, so muß eine besondere Beleuchtungseinrichtung Verwendung finden.

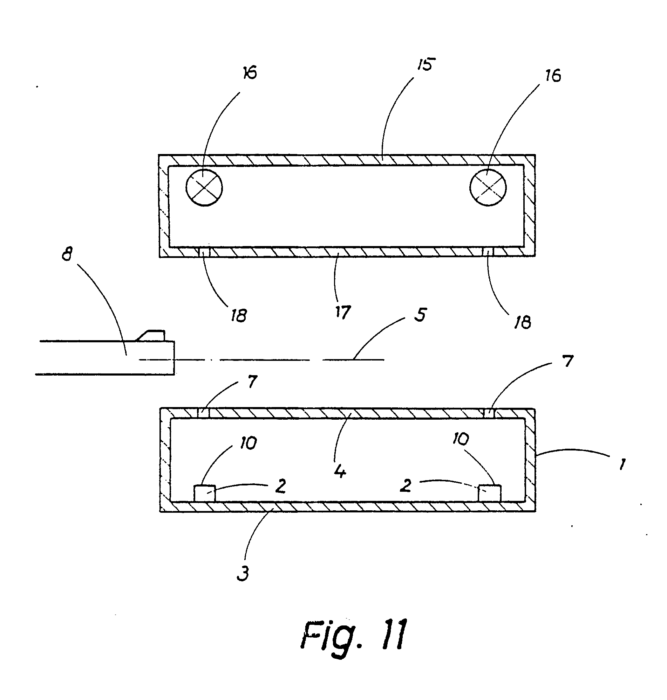

Bei der in Fig. 11 schematisch dargestellten Ausführungsform ist oberhalb des die Lichtempfänger 2 enthaltenden länglichen Gehäuses 1 ein zweites gleichgestaltetes, ebenfalls längliches und im Querschnitt rechteckiges Gehäuse 15 angeordnet, in dem zwei Lichtquellen 16 untergebracht sind, die beispielsweise in Gestalt von Lampen ausgebildet sind. Den Lichtquellen 16 gegenüberliegend sind in einer zu der Trennwand 4 des Gehäuses 1 parallel ausgerichteten und mit dieser im wesentlichen gleichgestalteten Blendenwand 17 zwei Lichtauslaßöffnungen 18 angeordnet, die den Lichteinlaßöffnungen 7 des Gehäuses 1 gegenüberliegen. Die Lichtauslaßöffnungen 18 sind ebenfalls als schmale Schlitze ausgebildet, die quer zu der Geschoßbahn 5 verlaufen und parallel zu den Lichteinlaßschlitzen 7 ausgerichtet sind. Die schlitzartigen Lichtauslaßöffnungen 18 ergeben längliche Lichtabstrahlflächen in der Blendenwand 17. Alternativ könnten auch Lichtquellen 16 mit länglicher Lichtabstrahlfläche verwendet werden, deren Lichtabstrahlfläche unmittelbar in der Blendenwand 17 angeordnet ist.

Ähnlich wie in Fig. 7 können vor den Lichtauslaßöffnungen 18 — und hier insbesondere vor der in Fig. 11 linken Lichtauslaßöffnung 18 — auf der Blendenwand 17 im Querschnitt keilförmige Geschoßabweiser 12 angeordnet sein, um ein Auftreffen des Geschosses auf eine Lichtauslaßöffnung 18 auszuschließen.

Die Lichtquellen 16 können auch annähernd punktförmig sein, wobei es dann zweckmäßig sein kann, in dem Gehäuse 15, entsprechend der Anordnung nach Fig. 5, vor jeder Lichtauslaßöffnung 18 eine Kondensorlinse anzuordnen, die das von der annähernd punktförmigen Lichtquelle 16 ausgehende Licht parallel richtet. Die Kondensorlinse kann gleichzeitig als Abdeckung für die zugeordnete Lichtauslaßöffnung 18 dienen, doch ist es auch möglich, in jede Lichtauslaßöffnung 18 eine eigene lichtdurchlässige Abdeckung einzusetzen, wie dies anhand der Lichteinlaßöffnungen 7 bereits erläutert worden ist.

Entsprechend der Darstellung nach den Fig. 8 bis 10 kann auch das zweite Gehäuse 15 auf seiner der Geschoßbahn 5 abgewandten Seite, d. h. oben oder seitlich, beispielsweise mittels eines Armes 14, ortsfest gehalten sein, was in Fig. 11 im einzelnen nicht weiter veranschaulicht ist.

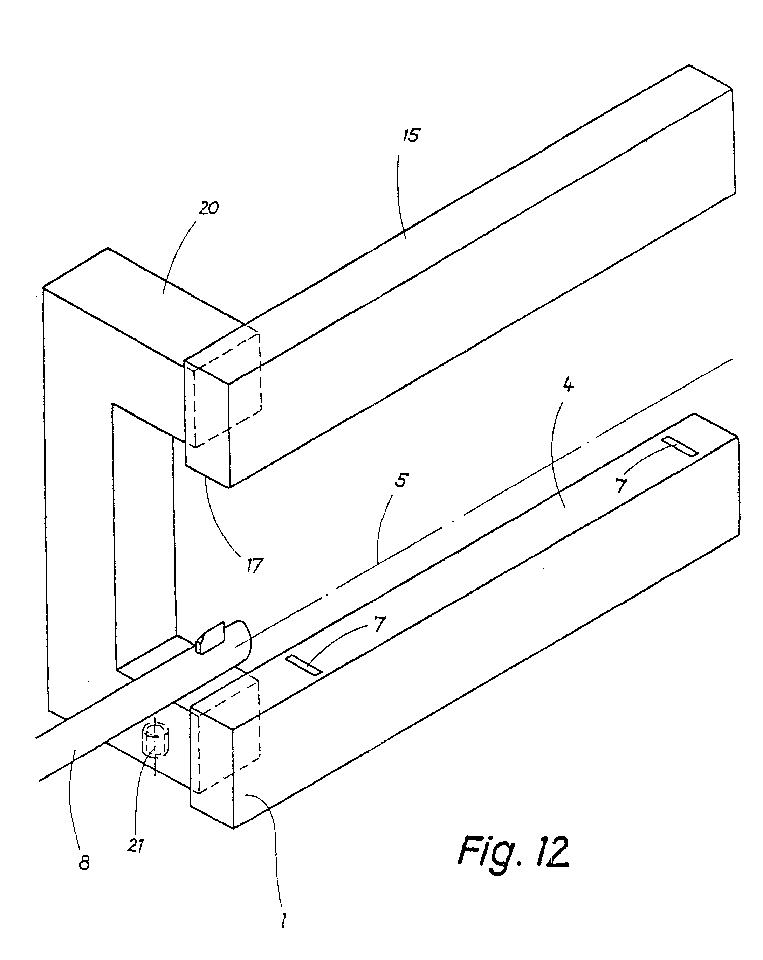

Solche praktische Ausführungsformen der Halterung der beiden Gehäuse 1, 15 sind in den Fig. 12 bis 14 dargestellt:

Bei der Ausführungsform nach Fig. 12 sind die beiden Gehäuse 1, 15 durch ein seitlich angesetztes, in der Nähe der Mündung des Laufes 8 angeordnetes Verbindungsstück 20 miteinander verbunden, das in Gestalt eines im wesentlichen U-förmigen Bügels ausgebildet ist. Das Verbindungsstück 20 kann zur Befestigung auf einem nicht weiter dargestellten Stativ eingerichtet sein und zu diesem Zwecke eine bei 21 angedeutete Gewindebohrung auf seiner Unterseite aufweisen. In dem hohlen gehäuseartigen Verbindungsstück 20 kann gegebenenfalls auch die Signalauswertungsschaltung und/oder die Anzeigeeinrichtung untergebracht sein.

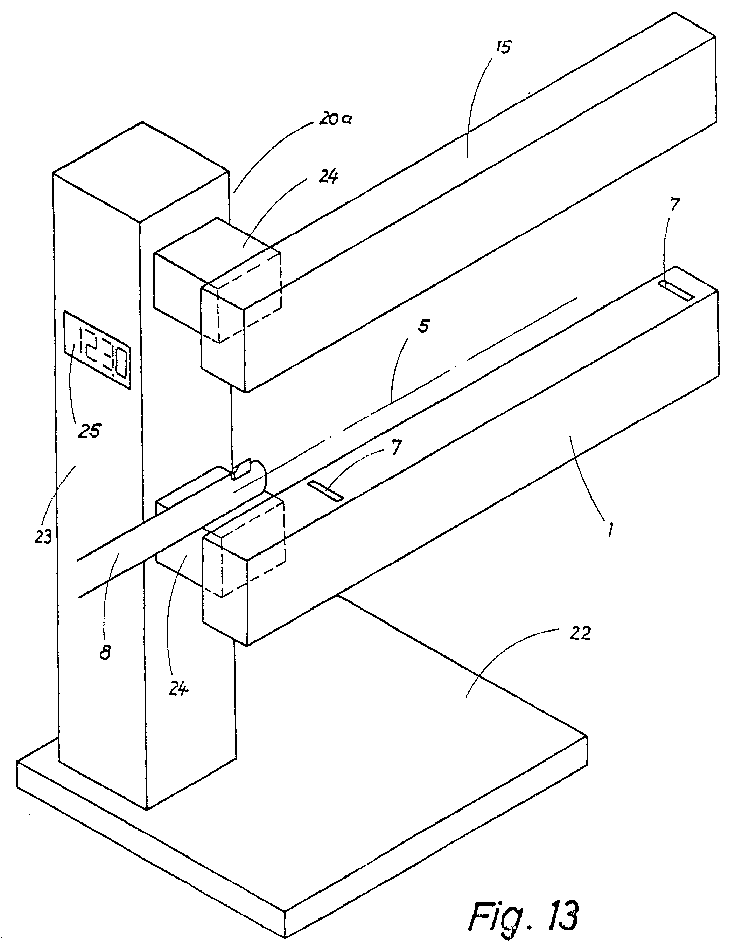

Bei der Ausführungsform nach Fig. 13 ist das Verbindungsstück 20a selbst als Stativ ausgebildet, das einen plattenartigen Aufstellfuß 22 aufweist. Das Verbindungsstück 20a ist auch hier in der Nähe der Mündung des Laufes 8 angeordnet; die Stativsäule 23 ist über zwei horizontale, von den Gehäusen 1, 15 seitlich abgehende Anschlußelemente 24 mit den Gehäusen 1, 15 verbunden. In der gehäuseartigen Säule 23 ist die Anzeigeeinrichtung und/oder die Signalauswertungsschaltung untergebracht, wobei die Anzeigeeinrichtung selbst bei 25 angedeutet ist.

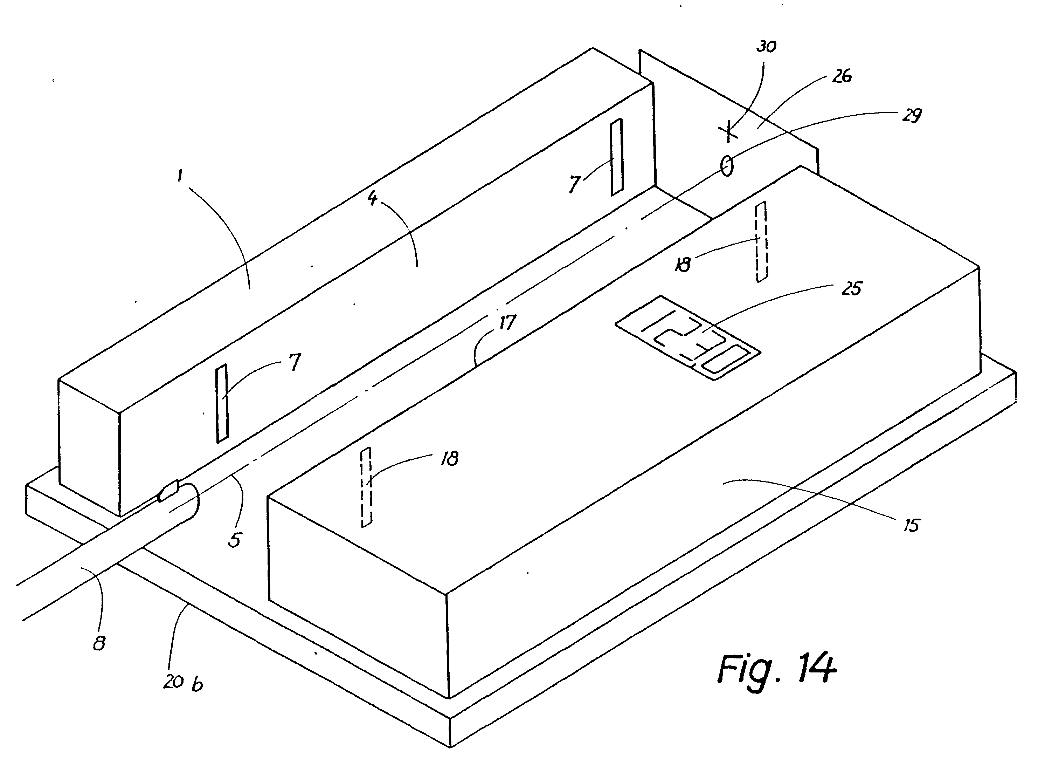

Bei einer weiteren Ausführungsform, die in Fig. 14 veranschaulicht ist, ist das Verbindungsstück 20b in Gestalt einer Grundplatte ausgebildet, auf die die beiden Gehäuse 1, 15 parallel zueinander verlaufend aufgesetzt sind. Das die Grundplatte bildende Verbindungsstück 20b weist somit, in Geschoßflugrichtung gesehen, eine zumindest dem Abstand der beiden Lichteinlaßöffnungen 7 entsprechende Längenabmessung auf, wobei es in dem Bereich zwischen der Trennwand 4 und der Blendenwand 17 eine geradlinige glatte Fläche bildet, die keinerlei Aufprallflächen für das aus dem Lauf 8 abgeschossene Geschoß bietet.

Die Signalauswertungsschaltung und/oder die Anzeigeeinrichtung 25 sind bei dieser Ausführungsform in dem Gehäuse 15 untergebracht; die Unterbringung in dem Gehäuse 1 wäre aber ähnlich möglich.

Schließlich wäre es auch denkbar, die Anordnung, bezogen auf Fig. 14, um 90° gedreht, d. h. mit vertikal ausgerichteter Grundplatte 20b einzusetzen.

Im Interesse der Erzielung einer möglichst großen Meßgenauigkeit soll die Geschoßbahn 5 parallel zu der Trennwand 4 und nach Möglichkeit immer auf der gleichen Linie liegen. Um die dazu erforderliche Ausrichtung des Laufes 8 zu erleichtern, ist auf der dem Ende des Laufes 8 gegenüberliegenden Seite eine Zielscheibe 26 angeordnet, die aus einem dafür geeigneten Material, beispielsweise Pappe, besteht und deren Befestigungsmittel außerhalb des Schußfeldes liegen.

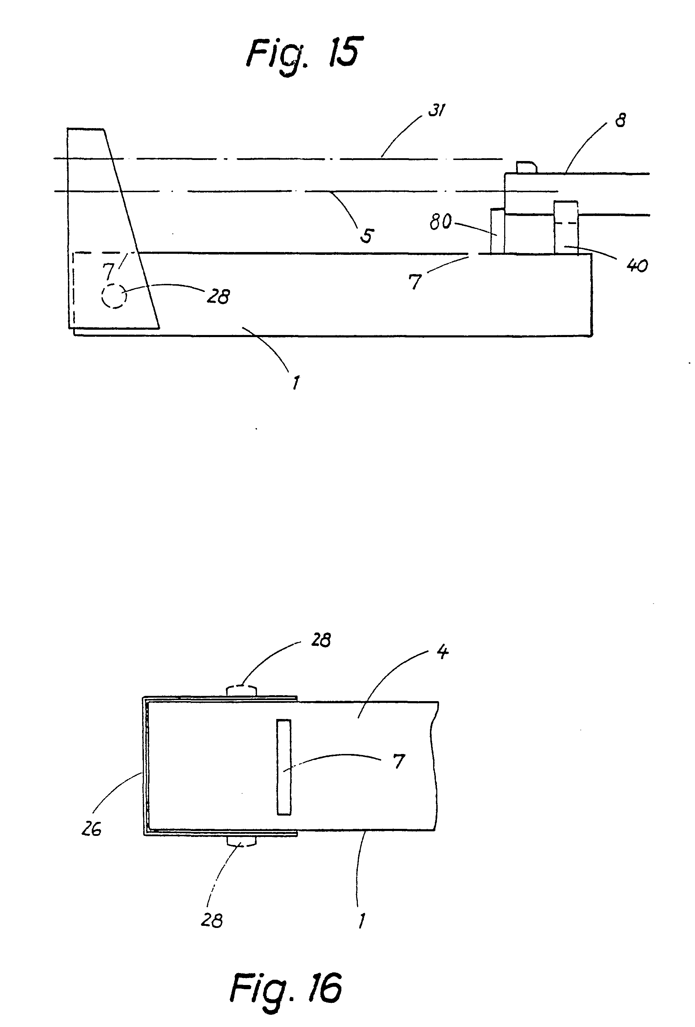

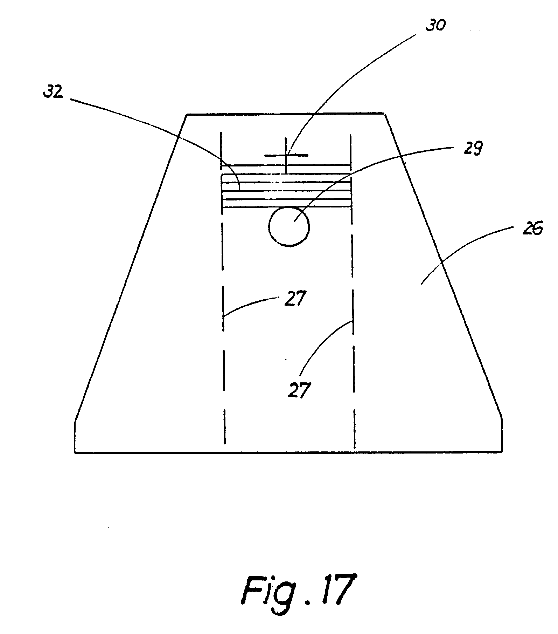

Während bei der Ausführungsform nach Fig. 14 die Zielscheibe 26 mittels zweier nicht weiter dargestellter Klammern an der hinteren Stirnseite der beiden Gehäuse 1, 15 befestigt ist, ist bei der Ausführungsform nach den Fig. 15, 16 die Anordnung derart getroffen, daß die in Fig. 17 dargestellte, im wesentlichen trapezförmige Zielscheibe 26 zwei parallele Faltlinien 27 aufweist, deren Abstand der Breite des Gehäuses 1 entspricht. Die Zielscheibe 26 ist in der aus den Fig. 15, 16 hervorgehenden Weise um die Faltlinien 27 etwa U-förmig gefaltet und endseitig auf das Gehäuse 1 aufgesetzt, wobei die beispielsweise aus Magnetknöpfen bestehenden Befestigungsmittel bei 28 angedeutet ist. Konzentrisch zu der Geschoßbahn 5 ist in der Zielscheibe 26 ein den Durchtritt des Geschosses gestattendes Loch 29 ausgestanzt, so daß die Scheibe bei genauer Einstellung der Waffe nicht oder nur wenig beschädigt wird. Oberhalb des Loches 29 ist auf der Zielscheibe 26 eine Visiermarke 30 angeordnet, die der in Fig. 15 bei 31 angedeuteten Visierlinie entspricht und konzentrisch zu dieser liegt. Je nach dem Abstand zwischen der Visierlinie 31 und der Geschoßbahn 5 liegt die Visiermarke 30 verschieden hoch; sie kann als Kreuz wie in Fig. 17 oder als Ring etc. ausgebildet sein. Zur Prüfung unterschiedlicher Waffen kann statt einer einzigen Visiermarke 30 eine Skala 32 (Fig. 17) zur Berücksichtigung unterschiedlicher Abstände zwischen der Laufbohrung und der Visierlinie 31 vorgesehen sein.

Die Ausrichtung der Waffe kann noch dadurch erleichtert werden, daß die Vorrichtung zumindest eine Auflage für das Ende des Laufes 8 aufweist, die in den Fig. 8, 15 schematisch bei 40 bzw. 400 angedeutet ist. Die ein Auflageprisma aufweisende Auflage 40 bzw. 400 ist bei praktisch rückstoßfreien Waffen, wie Luftdruckwaffen, ungefedert. Sie kann in einfachen Fällen, wie in Fig. 15, an dem Gehäuse 1 befestigt sein. Bei leichten rückstoßfreien Waffen können, wie in Fig. 8 gestrichelt angedeutet, auf einer an dem Gehäuse 1 befestigten Verlängerungsschiene 410 zwei Auflagen 40, 400 im Abstand angeordnet sein, so daß die aufgelegte Waffe selbsttätig ausgerichtet ist und sich Zielscheiben etc. erübrigen. Eine von dem Gehäuse getrennte Anordnung ist auch denkbar.

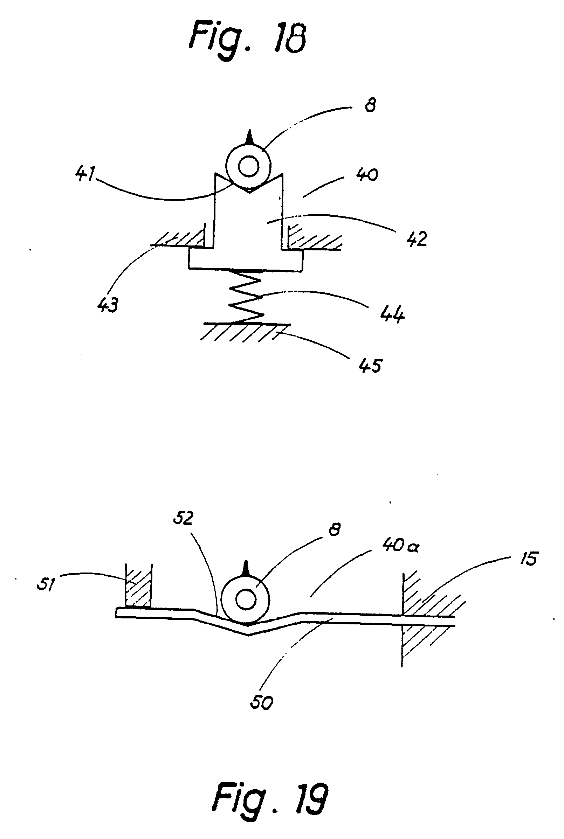

Bei anderen Waffen mit Rückstoß ist eine gefederte Ausführung zweckmäßig, deren praktische Konstruktion in zwei Ausführungsformen in den Fig. 18, 19 veranschaulicht ist:

Die Auflage 40 weist bei der Ausführungsform nach Fig. 18 einen mit einem Aufnahmeprisma 41 versehenen Auflagestempel 42 auf, der in einer ortsfesten Grundplatte 43 — die beispielsweise durch das Verbindungsstück 20b nach Fig. 14 gebildet sein kann — vertikal verschieblich gelagert und durch eine Druckfeder 44 gegen ein ortsfestes Widerlager 45 unten abgestützt ist.

Der Aufnahmestempel 42 ist damit derart gelagert, daß er unter einem bestimmten Druck nach unten nachgibt. Wenn das Ende des Laufes 8 bei Abgabe eines Schusses nicht nur nach oben, sondern auch nach unten auf den Auflagestempel 42 aufschlägt, wird durch diese federnde Lagerung des Auflagestempels 42 ein harter Schlag auf das Ende des Laufes 8 bzw. auf die Halterung (43, 45) des Aufnahmestempels 42 vermieden.

Bei der Ausführungsform nach Fig. 19 ist diese gefederte oder gepufferte Auflage des Laufes 8 dadurch erzielt, daß in eine seitlich des Laufes 8 angeordnete ortsfeste Halterung, die beispielsweise bei der Ausführungsform nach Fig. 14 durch das Gehäuse 15 oder 1 gebildet ist, eine horizontal verlaufende vorkragende Feder 50 einseitig eingespannt ist, die sich an ihrem freien Ende gegen ein ortsfestes Widerlager 51 — das beispielsweise durch das Gehäuse 1 der Ausführungsform nach Fig. 14 gebildet ist — nach oben zu federnd abstützt. Schlägt bei der Schußabgabe das Ende des Laufes 8 auf die Feder 50 auf, so kann diese nach unten ausweichen. Wird hingegen beim Auflegen des Laufes 8 auf die Feder 50 deren Vorspannung nicht überschritten, so daß sie mit ihrem freien Ende an dem Widerlager 51 in Anlage bleibt, so sind die Höhenlage und die seitliche Lage des Laufes 8 eindeutig fixiert. Dazu weist die Feder eine prismatische Flächengestaltung bei 52 auf.

In den Fig. 20, 21 schließlich sind zwei Ausführungsformen der den Lichtempfängern 2 zugeordneten Signalauswertungsschaltungen veranschaulicht:

Bei beiden Schaltungen sind den beiden Lichtempfängern 2 Verstärker 60 nachgeschaltet, durch die die die von den Lichtempfängern 2 abgegebenen Signale verstärkt werden, die dann auftreten, wenn das Geschoß den jeweils zugeordneten Lichteinlaßschlitz 7 überfliegt, wie dies bereits erläutert worden ist. Die Geschoßflugrichtung ist durch den Pfeil 13 angedeutet.

Das von dem linken (ersten) Lichtempfänger 2 kommende verstärkte Signal wird über eine Leitung 61 einem Speicher 62 zugeleitet, während der rechte (zweite) Lichtempfänger 2 über seinen Verstärker 60 und ein ODER-Glied 63 sowie eine Leitung 64 mit dem Speicher 62 verbunden ist.

Dem Speicher 62 ist ein Zähler 65 nachgeschaltet, der die ihm von einem Taktgenerator 66 mit vorbestimmter fester Taktfrequenz zugeführten Taktpulse zählen kann und der abhängig von dem jeweils erreichten Zählergebnis über eine Leitung 67 ein Signal einer Rechnerstufe 68 zuleitet, die ihrerseits die Anzeigeeinrichtung 25 ansteuert.

Bei Inbetriebsetzung der Vorrichtung stellt ein in der Rechnerstufe 68 enthaltener Schaltungsteil über eine Leitung 70 und das ODER-Glied 63 den Speicher 62 so ein, daß dieser über die Leitung 71 den Zähler 65 sperrt. Wird nun ein Geschoß von dem ersten (linken) Lichtempfänger 2 erfaßt, so stellt dessen über die Leitung 61 zugeführtes verstärktes Signal den Speicher 63 so ein, daß er über die Leitung 71 den Zähler 65 freigibt, der nun die ihm von dem Taktgeber 66 über die Leitung 72 zugeführten Pulse zählt.

Wird das Geschoß kurze Zeit später von dem zweiten (rechten) Lichtempfänger 2 erfaßt, so stellt dessen verstärktes, über das ODER-Glied 63 und die Leitung 64 zugeführte Signal den Speicher 62 so ein, daß er über die Leitung 71 den Zähler 65 wieder sperrt.

Über die Leitung 67 wird ein der Veränderung des Zählerstandes des Zählers 65 entsprechendes Signal der Rechnerstufe 68 zugeführt, die aus dieser Veränderung des Zählerstandes, aus der bekannten Taktfrequenz des Taktgebers 66 und aus dem bekannten Abstand der beiden Lichteinlaßschlitze 7 die Geschwindigkeit des Geschosses errechnet und ein entsprechendes Signal über die Leitung 73 der Anzeigeeinrichtung 25 zuleitet, die das Rechenergebnis zur Anzeige bringt.

Um die Unterscheidung des Geschosses von Störeinflüssen, wie Flammenfront, Rauchwolke und Begleitstoffen sicher zu gewährleisten, kann es zweckmäßig sein, die Empfindlichkeit der Verstärker 60 oder der Lichtempfänger 2 stufenlos oder in Stufen einstellbar zu machen.

Bei bestimmten Feuerwaffen können Störeinflüsse, beispielsweise eine Flammenfront, nicht vor dem Geschoß herlaufen, sondern erst hinter dem Geschoß auftreten. Um auch hier Fehlmessungen zu verhüten, kann die Anordnung derart getroffen sein, daß nach dem Empfang des von dem zweiten (rechten) Lichtempfänger 2 kommenden Signales die Rechnerstufe 68 für eine bestimmte Zeit, in der Störeinflüsse auftreten können, über das ODER-Glied 63 und den Speicher 62 den Zähler sperrt.

Bei dieser Funktion der Schaltung kann gelegentlich die Gefahr auftreten, daß der erste (linke) Lichtempfänger 2 so kurz nach dem Ansprechen des zweiten (rechten) Lichtempfängers auf das Geschoß seinerseits von neuem auf einen Störeinfluß anspricht, daß der Zähler 65 nur kurzzeitig das Zählen unterbricht, mit dem Ergebnis, daß die Rechnerstufe 68 die Unterbrechung des Zählens — falls eine solche Unterbrechung überhaupt zustandekommt — nicht bemerken kann. Eine Abhilfe bringt hier die Schaltung nach Fig. 21, in der gleiche Teile mit gleichen Bezugszeichen wie in Fig. 20 bezeichnet sind, so daß sich eine nochmalige Erläuterung insoweit erübrigt.

Dem Speicher 62 ist dabei ein UND-Glied 75 nachgeschaltet, dessen zweiter Eingang von einem zweiten Speicher 76 angesteuert wird, der einerseits an die Leitung 70 und andererseits über eine Leitung 77 an den Verstärker 60 des zweiten (rechten) Lichtempfängers 2 angeschlossen ist.

Wenn der zweite (rechte) Lichtempfänger 2 das Geschoß erfaßt, stellt er den Speicher 76 so ein, daß er über das UND-Glied 75 die Freigabe des Zählers 65 solange sperrt, bis die Rechnerstufe 68 die beiden Speicher 62, 76 wieder zurücksetzt, derart, daß der Zähler 65 beim nächsten Ansprechen des ersten (linken) Lichtempfängers 2 wieder gestartet werden kann.

Für die Prüfung von Waffen mit dem Geschoß vorauseilendem Mündungsfeuer können auch an der Vorrichtung selbst konstruktive Vorkehrungen getroffen werden:

Wie aus Fig. 15 ersichtlich, ist neben der Auflage 40 auf dem Gehäuse 1 ein Anschlag 80 für das Laufende angeordnet, der sich nahe dem der Laufmündung benachbarten Lichteinlaßschlitz 7 befindet. Dem Anschlag 80 liegt die Überlegung zugrunde, daß erst dann, nachdem das Geschoß den Lauf verlassen hat, die heißen Gase in Schußrichtung das Geschoß überholen und von einem Lichtempfänger 2 statt des Geschosses erfaßt werden können. Diese Gefahr besteht jedoch höchstens auf einer am Laufende beginnenden Strecke von der Länge des Mündungsfeuers. Befindet sich nun die Laufmündung sehr nahe dem ersten (in Fig. 15 rechten) Lichtempfänger 2, d. h. dessen Lichteinlaßschlitz 7, so erfaßt dieser erste Lichtempfänger 2 noch das Geschoß, weil die Flamme das Geschoß noch nicht überholt hat.

Ordnet man den zweiten (in Fig. 15 linken) Lichtempfänger 2, d. h. dessen Lichteinlaßschlitz 7, in einem Abstand von dem ersten Lichtempfänger 2 an, der größer ist als das längste zu erwartende Mündungsfeuer, so kann der zweite Lichtempfänger 2 nicht mehr von der Mündungsflamme erreicht werden und diese erfassen. Auf diese Weise kann der in Fig. 4 bei 9 angedeutete und im Zusammenhang mit Fig. 4 erläuterte Abstand zwischen dem Laufende und dem ersten Lichtempfänger 2 vermieden werden.

Der Anschlag 80, welcher an dem Lichteinlaßschlitz 7 des ersten Lichtempfängers 2 angeordnet ist, erleichtert das Halten der Waffe, derart, daß deren Laufende sich nahe dieses Lichteinlaßschlitzes 7 befindet, wie dies aus Fig. 15 hervorgeht.

## Patentansprüche

1. Vorrichtung zum Messen der Geschwindigkeit eines von einer Hand- oder Faustfeuerwaffe längs einer Geschoßbahn (5) abgeschossenen Geschosses (6), mit zwei längs einer von dem Geschoß (6) überflogenen Meßstrecke im vorbestimmten Abstand hintereinander angeordneten Lichtschranken, von denen jede einen Lichtempfänger (2) aufweist, der durch eine jeweils eine Lichteinlaßöffnung (7) enthaltende, als Blende wirkende Trennwand (4), die im wesentlichen parallel zu der Geschoßbahn (5) ausgerichtet ist und sich an beiden Enden der Meßstrecke über die Lichtempfänger (7) hinaus erstreckt, gegen die Geschoßbahn (5) abgeschirmt ist, sowie mit einer elektronischen Signalauswertschaltung, durch die von den beiden hinter der die Lichteinlaßöffnung (7) enthaltenden Blende angeordneten Lichtempfängern (2) in Abhängigkeit von der durch das darüberfliegende Geschoß (6) bewirkten Abdunkelung der Lichteinlaßöffnungen (7) aufeinanderfolgend abgegebene Signale verarbeitet und einer Anzeigeeinrichtung (25) zugeleitet werden, dadurch gekennzeichnet, daß die die Lichtempfänger (7) gegen das Geschoß (6) schützende Trennwand (4) eben ist und die Geschoßbahn (5) nur einseitig begrenzt, daß die Trennwand (4) derart ausgebildet und gehaltert ist, daß beim Gebrauch die Laufmündung einer Hand- oder Faustfeuerwaffe die Trennwand überragend gehalten werden kann, und daß die Trennwand Teil eines neben der Geschoßbahn (5) angeordneten und die Lichtempfänger (2) enthaltenden Gehäuses (1) ist.

2. Vorrichtung nach Anspruch 1, dadurch gekennzeichnet, daß das längliche Gehäuse (1) zumindest auf der der Geschoßbahn (5) zugewandten Seite in Geschoßflugrichtung (13) prismatisch gestaltet ist.

3. Vorrichtung nach einem der vorhergehenden Ansprüche, dadurch gekennzeichnet, daß die Lichteinlaßöffnungen als längliche, quer zu der Geschoßbahn (5) ausgerichtete schmale Lichteinlaßschlitze (7) ausgebildet sind.

4. Vorrichtung nach Anspruch 1, dadurch gekennzeichnet, daß das Gehäuse (1) auf der der Geschoßbahn (5) gegenüberliegenden Seite ortsfest gehaltert ist.

5. Vorrichtung nach Anspruch 1, dadurch gekennzeichnet daß das Gehäuse (1) seitlich der Geschoßbahn (5) gehaltert ist.

6. Vorrichtung nach Anspruch 4 oder 5, dadurch gekennzeichnet, daß die Halterung (14) des Gehäuses (1) nahe der Laufmündung angeordnet ist.

7. Vorrichtung nach einem der vorhergehenden Ansprüche dadurch gekennzeichnet, daß auf der der Trennwand (4) gegenüberliegenden Seite ein wenigstens eine Lichtquelle (16) enthaltendes Gehäuse (15) angeordnet ist, das in einer sich im Abstand längs der Trennwand (4) erstreckenden Blendenwand (17) zwei den Lichteinlaßöffnungen (7) der Trennwand (4) zugeordnete Lichtabstrahlflächen aufweist, die gegebenenfalls durch Lichtauslaßöffnungen (18) gebildet sind.

8. Vorrichtung nach den Ansprüchen 3 und 7, dadurch gekennzeichnet, daß sie längliche Lichtabstrahlflächen aufweist, die quer zu der Geschoßbahn (5) ausgerichtet sind.

9. Vorrichtung nach den Ansprüchen 1 und 7, dadurch gekennzeichnet, daß die beiden Gehäuse (1, 15) durch wenigstens ein seitlich der Geschoßbahn (5) verlaufendes Verbindungsstück (20, 20a, 20b) miteinander verbunden sind.

10. Vorrichtung nach Anspruch 9, dadurch gekennzeichnet, daß das Verbindungsstück (20, 20a) nahe der Laufmündung der Waffe angeordnet ist.

11. Vorrichtung nach Anspruch 9 oder 10, dadurch gekennzeichnet, daß das Verbindungsstück (20, 20b) zur Befestigung an einem Stativ eingerichtet ist.

12. Vorrichtung nach Anspruch 9 oder 10, dadurch gekennzeichnet, daß das Verbindungsstück (20a) ein gehäuseartiges Teil eines Statives bildet.

13. Vorrichtung nach einem der Ansprüche 9 bis 12, dadurch gekennzeichnet, daß das Verbindungsstück (20b) in Geschoßflugrichtung (13) eine zumindest dem Abstand der beiden Lichteinlaßöffnungen (7) entsprechende Längenabmessung aufweist.

14. Vorrichtung nach Anspruch 13, dadurch gekennzeichnet, daß das Verbindungsstück (20b) als Grundplatte für die auf ihm befestigten Gehäuse (1, 15) ausgebildet ist.

15. Vorrichtung nach einem der vorhergehenden Ansprüche, dadurch gekennzeichnet, daß sie zumindest eine Auflage (40) für den Lauf (8) der Waffe aufweist, die gegebenenfalls elastisch ausgebildet ist.

## Claims

1. An apparatus for measuring the velocity of a bullet (6) shot along a trajectory (5) from a weapon held in the hand or fist, the apparatus having : two light barriers disposed spaced out at a predetermined distance one behind the other along a measured distance passed over by the bullet (6) and each having a light receiver (2) screened against the trajectory (5) of the bullet by a partition (4) which acts as a baffle, contains a light inlet aperture (7), is aligned substantially parallel with the trajectory (5) of the bullet. and extends at both ends of the measured distance beyond the light receivers (7) ; and an electronic signal evaluating circuit, by which the signals delivered in succession, in dependence on the darkening of the light inlet apertures (7) caused by the bullet (6) flying thereover, by the two light receivers (2) disposed behind the baffle containing the light inlet aperture (7), are processed and supplied to a display device (25), characterized in that the partition (4) protecting the light receivers (7) against the bullet (6) is flat and limits the trajectory (5) of the bullet on only one side ; the partition (4) is so constructed and retained that when used the mouth of the barrel of a weapon held in the hand or fist can be held reaching over the partition : and the partition is part of a casing (1) disposed alongside the trajectory (5) of the bullet and containing the light receivers (2).

2. An apparatus according to claim 1, characterized in that the elongate casing (1) is prismatic in shape in the direction (13) of the flight of the bullet, at least on the side adjacent the trajectory (5) thereof.

3. An apparatus according to any one of the preceding claims, characterized in that the light inlet apertures take the form of elongate, narrow light inlet slits (7) aligned transversely of the trajectory (5) of the bullet.

4. An apparatus according to claim 1, characterized in that the casing (1) is retained fixed on the side opposite the trajectory (5) of the bullet.

5. An apparatus according to claim 1, characterized in that the casing (1) is retained laterally of the trajectory (5) of the bullet.

6. An apparatus according to claims 4 or 5, characterized in that the retaining means (14) for the casing (1) is disposed adjacent the mouth of the barrel.

7. An apparatus according to any of the preceding claims, characterized in that disposed on the side opposite the partition (4) is a casing (15) which contains at least one light source (16) and has, in a baffle wall (17) extending at a distance along the partition (4), two light radiating surfaces associated with the light inlet apertures (7) of the partition (4) and if necessary formed by light outlet apertures (18).

8. An apparatus according to claims 3 and 7, characterized in that it has elongate light radiating surfaces which are aligned transversely of the trajectory (5) of the bullet.

9. An apparatus according to claims 1 and 7, characterized in that the two casings (1, 15) are interconnected via at least one connecting member (20, 20a, 20b) extending laterally of the trajectory (5) of the bullet.

10. An apparatus according to claim 9, characterized in that the connecting member (20, 20a) is disposed adjacent the mouth of the barrel of the weapon.

11. An apparatus according to claims 9 or 10, characterized in that the connecting member (20, 20b) is devised for attachment to a stand.

12. An apparatus according to claims 9 or 10, characterized in that the connecting member (20a) forms a casing-like part of a stand.

13. An apparatus according to any of claims 9 to 12, characterized in that the connecting member (20b) has in the direction (13) of the flight of the bullet a longitudinal dimension corresponding at least to the distance between the two light inlet apertures (7).

14. An apparatus according to claim 13, characterized in that the connecting member (20b) is constructed in the form of a base plate for the casing (1, 15) attached thereto.

15. An apparatus according to any one of the preceding claims, characterized in that it has at least one if necessary resilient support (40) for the barrel (8) of the weapon.

## Revendications

1. Dispositif de mesure de la vitesse d'un projectile (6) tiré par une arme individuelle ou une arme de poing le long d'une trajectoire de projectile (5), comportant deux barrières lumineuses disposées l'une derrière l'autre selon un écartement prédéterminé le long d'un trajet de mesure parcouru par le projectile (6), chaque barrière lumineuse présentant un récepteur de lumière (2) isolé de la trajectoire du projectile (5) au moyen d'une paroi de séparation (4) agissant comme écran et contenant chaque fois un orifice d'entrée de la lumière (7), paroi (4) orientée sensiblement parallèlement à la trajectoire de projectile (5) et s'étendant au-delà des récepteurs de lumière (7) aux deux extrémités du trajet de mesure, dispositif comportant également un circuit électronique d'exploitation des signaux au moyen duquel les signaux qui sont délivrés consécutivement par les deux récepteurs de lumière (2) disposés derrière l'écran contenant les orifices d'entrée de lumière (7) et qui sont fonction de l'obscurcissement des orifices d'entrée de lumière (7) provoqué par le passage du projectile (6) au-dessus de ces derniers sont traités et fournis à un dispositif d'affichage (25), caractérisé en ce que la paroi de séparation (4) protégeant les récepteurs de lumière (2) vis-à-vis du projectile (6) est plane et ne délimite la trajectoire du projectile (5) que d'un côté, en ce que la paroi de séparation (4) est réalisée et fixée de telle sorte que, lors de l'utilisation, la bouche d'une arme individuelle ou d'une arme de poing peut être tenue de façon à ce qu'elle surplombe la paroi de séparation, et en ce que la paroi de séparation fait partie d'un carter (1) disposé à côté de la trajectoire du projectile (5) et contenant les récepteurs de lumière (2).

2. Dispositif selon la revendication 1, caractérisé en ce que le carter allongé (1) est de forme prismatique, au moins du côté qui est tourné vers la trajectoire du projectile (5), dans le sens de vol du projectile (13).

3. Dispositif selon l'une des revendications précédentes, caractérisé en ce que les orifices d'entrée de lumière sont réalisés sous la forme de fentes d'entrée de lumière (7) allongées et étroites, orientées transversalement par rapport à la trajectoire du projectile (5).

4. Dispositif selon la revendication 1, caractérisé en ce que le carter (1) est fixe sur le côté opposé à la trajectoire du projectile (5).

5. Dispositif selon la revendication 1, caractérisé en ce que le carter (1) est maintenu latéralement par rapport à la trajectoire du projectile (5).

6. Dispositif selon la revendication 4 ou 5, caractérisé en ce que la fixation (14) du carter (1) est disposée à proximité de la bouche.

7. Dispositif selon l'une des revendications précédentes, caractérisé en ce qu'un carter (15) contenant au moins une source de lumière (16) est disposé du côté qui fait face à la paroi de séparation (4), carter (15) présentant, dans une paroi d'écran (17) s'étendant à distance le long de la paroi de séparation (4), deux surfaces de rayonnement de la lumière associées aux orifices d'entrée de lumière (7) de la paroi de séparation (4) et formées le cas échéant par des orifices de sortie de lumière (18).

8. Dispositif selon les revendications 3 et 7, caractérisé en ce qu'il présente des surfaces de rayonnement de la lumière allongées, orientées transversalement par rapport à la trajectoire du projectile (5).

9. Dispositif selon les revendications 1 et 7, caractérisé en ce que les deux carters (1, 15) sont reliés entre eux par au moins une pièce de liaison (20, 20a, 20b) se développant latéralement par rapport à la trajectoire du projectile (5).

10. Dispositif selon la revendication 9, caractérisé en ce que la pièce de liaison (20, 20a) est disposée à proximité de la bouche de l'arme.

11. Dispositif selon la revendication 9 ou 10, caractérisé en ce que la pièce de liaison (20, 20b) est montée sur un support pour la fixation.

12. Dispositif selon la revendication 9 ou 10, caractérisé en ce que la pièce de liaison (20a) forme une partie en forme de carter d'un support.

13. Dispositif selon l'une des revendications 9 à 12, caractérisé en ce que la pièce de liaison (20b) présente dans le sens de vol du projectile (13) une longueur correspondant au moins à la distance entre les deux orifices d'entrée de lumière (7).

14. Dispositif selon la revendication 13, caractérisé en ce que la pièce de liaison (20b) est réalisée sous la forme d'une plaque de base pour les carters (1, 15) fixés sur cette dernière.

15. Dispositif selon l'une des revendications précédentes, caractérisé en ce qu'il présente, pour le canon (8) de l'arme, au moins un appui (40), réalisé le cas échéant de manière élastique.

Fig. 3

Fig. 2

Fig. 1

Fig. 4

Fig. 5

Fig. 6

Fig. 7

Fig. 8

Fig. 9

Fig. 10

Fig. 11

Fig. 12

Fig. 13

Fig. 14

# Fig. 15

# Fig. 16

Fig. 17

10

# Fig. 18

# Fig. 19

Fig. 20

Fig. 21